# EUROPÄISCHE PATENTSCHRIFT

(11) **EP 1 485 263 B1**
(45) Veröffentlichungstag und Bekanntmachung des Hinweises auf die Patenterteilung: **27.06.2007**
(21) Anmeldenummer: 03720326.2
(22) Anmeldetag: 11.03.2003
(51) Int. Cl.: B60B 35/10

(54) **ACHSE FÜR NUTZFAHRZEUGE**
AXLE FOR COMMERCIAL VEHICLES
ESSIEU DE VEHICULES UTILITAIRES

(30) Priorität: 15.03.2002 DE 10211472
(43) Veröffentlichungstag der Anmeldung: 15.12.2004
(73) Patentinhaber: ZF FRIEDRICHSHAFEN Aktiengesellschaft, 88038 Friedrichshafen (DE)
(72) Erfinder: EICKHOFF, Mathias, 94081 Fürstenzell (DE); BRYSCH, Werner, 94036 Passau (DE)
(86) Internationale Anmeldenummer: PCT/EP2003/002457
(87) Internationale Veröffentlichungsnummer: WO 2003/078180

(56) Entgegenhaltungen:
- EP-A- 0 324 913
- EP-A- 0 599 293

## Beschreibung

Die Erfindung betrifft eine Achse für Nutzfahrzeuge nach der im Oberbegriff von Anspruch 1 näher definierten Art.

Achsen für Nutzfahrzeuge, wie z. B. Antriebsachsen für Niederflur-Omnibusse, werden vorwiegend als Starrachsen eingesetzt. Da die Fahrzeuge jedoch sehr unterschiedliche Gesamtbreiten aufweisen, ist es notwendig, in ihrer Länge unterschiedliche Achsen für verschiedene Fahrzeuge zu schaffen. Insbesondere ist es notwendig, dass die Reifenaußenkanten der Achsen möglichst wenig oder überhaupt nicht gegenüber der Fahrzeugbreite nach innen stehen, da andernfalls das Design und die Fahrdynamik, insbesondere die Wank-Abstützung, negativ beeinflußt wird. Um die unterschiedlichen Längen der Achsen zu erreichen, wird in der Regel das Achsmittelteil verändert, so dass für verschiedene Nutzfahrzeugbreiten unterschiedliche Achsmittelteile verwendet werden müssen. Dies beeinflußt insbesondere die Logistik und Lagerhaltung des Achsenherstellers negativ.

Die EP 0 599 293 B1 offenbart eine Starrachse für Nutzfahrzeuge mit einem Achsmittelteil, welches mit Radnaben verbunden ist, an welchen Felgen mit darauf angeordneten Reifen befestigt sind. Die Portalachse ist mit Zwillings-Reifen bestückt, so dass sich hier das Problem der Wank-Abstützung nicht so gravierend ausprägt wie bei der Verwendung von Single-Reifen.

Der vorliegenden Erfindung liegt die Aufgabe zugrunde, eine Achse für Nutzfahrzeuge zu schaffen, welche in Nutzfahrzeugen unterschiedlicher Breite Verwendung findet, auch mit Single-Reifen verwendet werden kann und bei welcher die Grundbauteile der Achse gleich bleiben.

Die Aufgabe wird mit einer, die Merkmale des Hauptanspruchs aufweisenden Achse für Nutzfahrzeuge gelöst.

Erfindungsgemäß besteht die Achse aus einem Achsmittelteil, welches mit Radnaben in Verbindung steht, welche mit Felgen und auf diesen angeordneten Reifen verbindbar sind. Um die Achse in Nutzfahrzeugen unterschiedlicher Breite anzuwenden, wird die Länge des Achsmittelteils so ausgelegt, dass ausschließlich durch Variation der Einpreßtiefe der Felge und der Breite der Reifen die Achse für breite und schmale Fahrzeuge angewendet werden kann. Hierbei ist die Länge des Achsmittelteils sowie die Einpreßtiefe und Breite der Reifen so auszulegen, dass die Radaufstandskraft innerhalb der Druckpunktlinien der jeweiligen Radlager angeordnet ist. Vorzugsweise ist das Achsmittelteil, die Felgeneinpreßtiefe und die Radbreite so auszulegen, dass die Lagerlebensdauer der Radlager sowohl bei breiten als auch bei schmalen Fahrzeugen nahezu gleich bleibt. Somit wird eine Achse für Nutzfahrzeuge geschaffen, bei welcher die wesentlichen Achsteile gleich bleiben und durch ausschließliche Änderung der Einpreßtiefe der Felge und der Breite der Reifen die Achse für breite und schmale Nutzfahrzeuge verwendet werden kann. Somit wird die Logistik und Lagerhaltung erheblich verbessert.

Weitere Merkmale sind der Figuren-Beschreibung zu entnehmen.

Es zeigen:

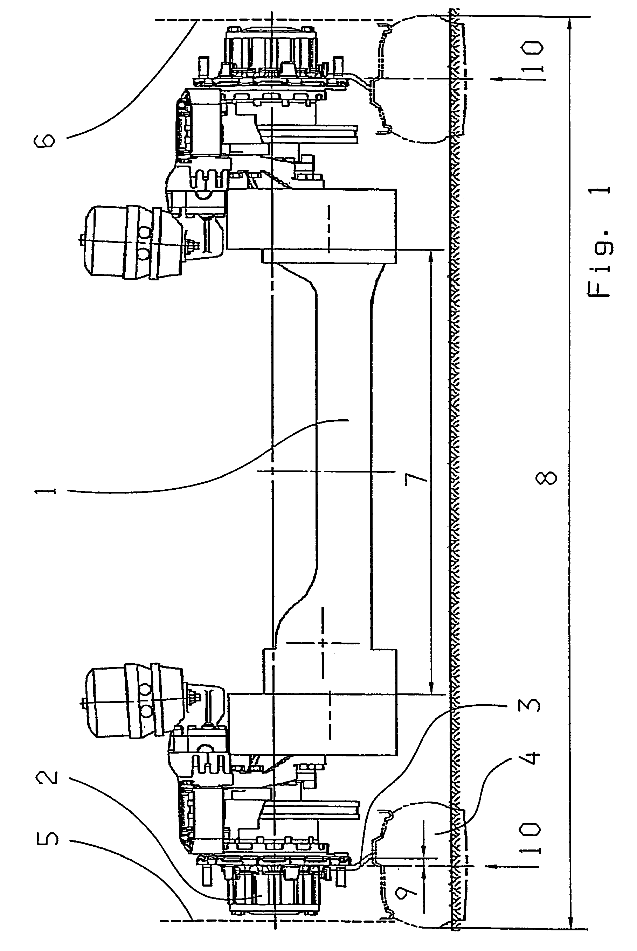

- Fig. 1: eine Starrachse für Nutzfahrzeuge für ein schmales Fahrzeug;

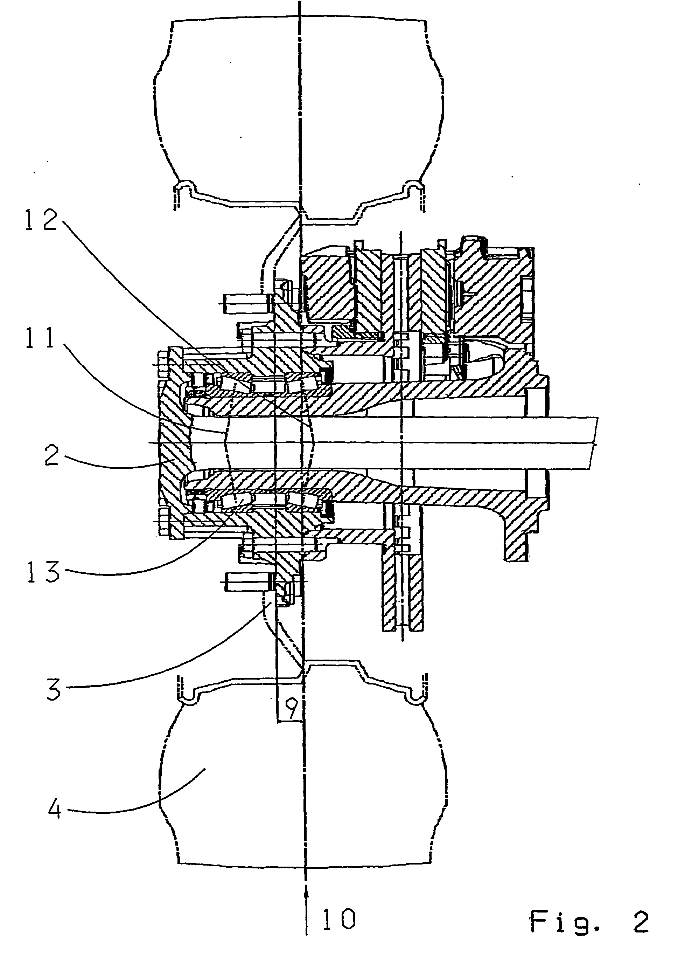

- Fig. 2: einen Ausschnitt der Achse nach Fig. 1;

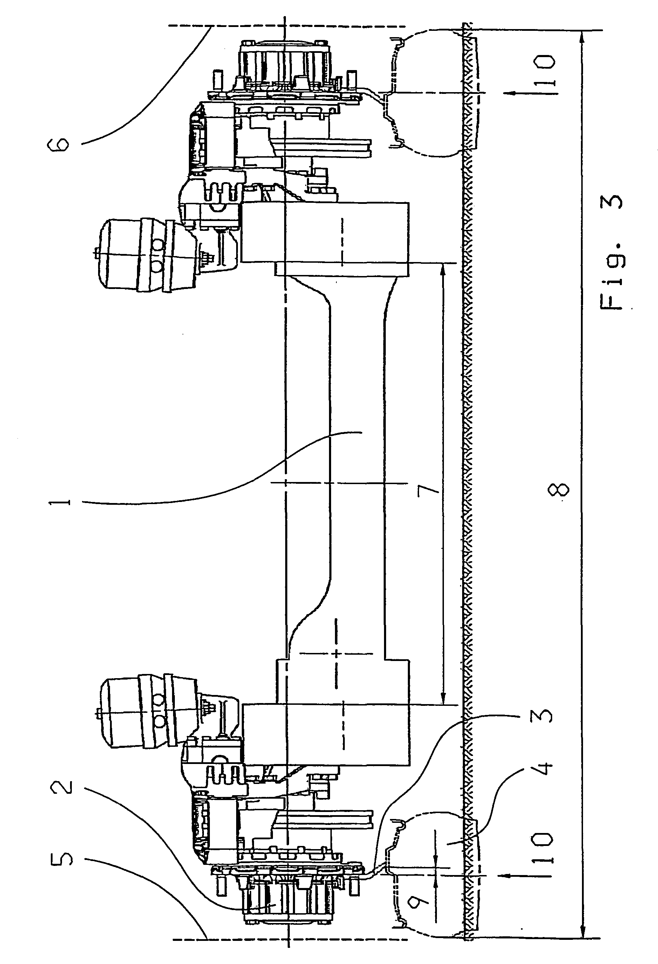

- Fig. 3: eine Achse für Nutzfahrzeuge für breite Fahrzeuge und

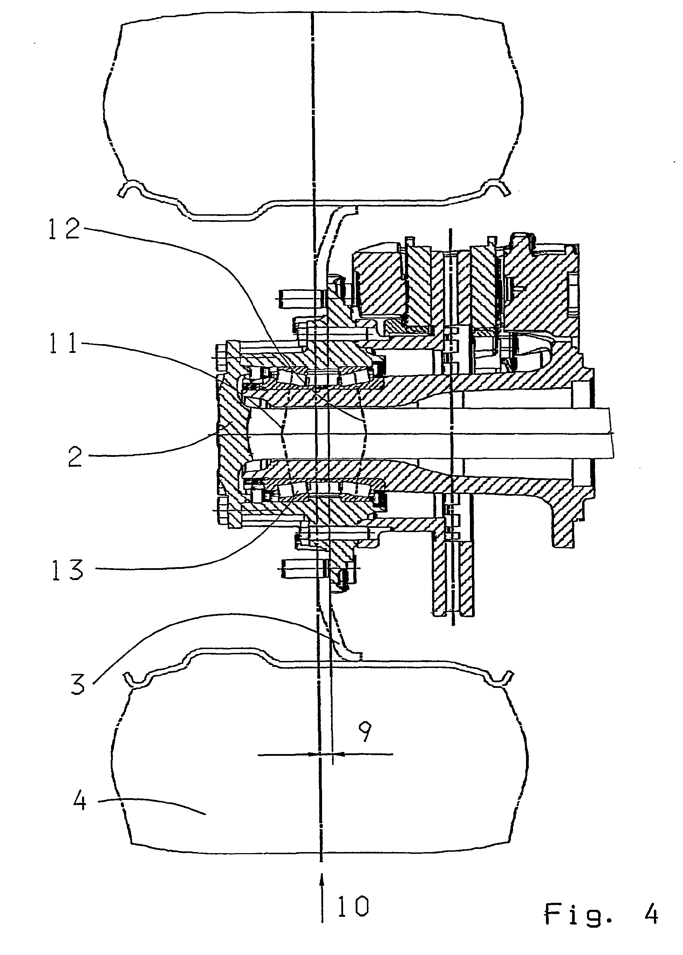

- Fig. 4: einen Ausschnitt der Achse nach Fig. 3.

### Fig. 1:

Ein Achsmittelteil 1 steht mit Radnaben 2 in Verbindung, an welche eine Felge 3 mit darauf angeordneten Reifen 4 befestigt ist. Die Fahrzeugbreite ist durch die Linie 5 und 6 angedeutet. Die Länge 7 des Achsmittelteils 1 ist so ausgelegt, dass die Gesamtbreite 8 der Achse nahezu der Fahrzeugbreite, welche durch die Linien 5 und 6 angedeutet ist, entspricht. Hierzu ist zusätzlich die Einpreßtiefe 9 der Felge 3 und die Breite des Reifens 4 bei der Auslegung mitberücksichtigt.

### Fig. 2:

Eine Felge 3 ist mit der Radnabe 2 verbunden und trägt den Reifen 4. Die Einpreßtiefe 9 sowie die Breite des Reifens 4 sind so ausgelegt, dass eine Radaufstandskraft 10 innerhalb der Druckpunktlinien 11 und 12 des Radlagers 13 angeordnet ist, so dass die Radlager 13 eine ausreichende Lebensdauer aufweisen.

### Fig. 3:

Ein Achsmittelteil 1 steht mit den Radnaben 2 in Verbindung. Auf den Radnaben 2 sind die Felge 3 und die Reifen 4 angeordnet. Die Fahrzeugbreite wird durch die Linien 5 und 6 schematisch dargestellt. Die Breite des Reifens 4, die Einpreßtiefe 9 der Felge 3 sowie die Länge 7 des Achsmittelteils 1 sind so ausgelegt, dass die Gesamtbreite 8 der Achse nahezu der Gesamtbreite des Fahrzeugs, dargestellt durch die Linien 5 und 6, entspricht.

### Fig. 4:

Die Einpreßtiefe 9 und die Breite des Reifens 4 sind so ausgelegt, dass die Radaufstandskraft 10 innerhalb der Druckpunktlinien 11 und 12 des Radlagers 13 so angeordnet ist, dass die Radlager 13 eine ausreichende Lebensdauer aufweisen. Durch die Auslegung der Länge 7 des Achsmittelteils 1 der Einpreßtiefe 9 und der Breite des Reifens 4 ist es möglich, alle wesentlichen Bauteile der Achse, insbesondere das Achsmittelteil 1, auch für unterschiedliche Fahrzeugbreiten gleich zu belassen.

### Bezugszeichen

- 1: Achsmittelteil
- 2: Radnaben
- 3: Felge
- 4: Reifen
- 5: Linie
- 6: Linie
- 7: Länge
- 8: Gesamtbreite
- 9: Einpreßtiefe
- 10: Radaufstandskraft
- 11: Druckpunktlinien
- 12: Druckpunktlinien
- 13: Radlager

## Patentansprüche

1. Achse für Nutzfahrzeuge mit einem Achsmittelteil (1), Radnaben (2), Radlager (13) und mit auf den Radnaben (2) anbringbaren Felgen (3), mit verschiedenen definierten Einpreßtiefen (9) und auf den Felgen (3) montierbaren Reifen (4) mit verschiedenen definierten Breiten und einer durch die Bauteile der Achse (8); der Felgen (3) und Reifen (4) bestimmten Gesamtbreite (8), wobei bei Anwendung der Achse in mindestens zwei in ihrer Breite deutlich unterschiedlichen Nutzfahrzeugen die Länge (7) des Achsmittelteils (1) so bestimmt wird, dass die für die jeweiligen Nutzfahrzeuge benötigte Gesamtbreite der Achse (8) ausschließlich durch Veränderung der Einpreßtiefe (9) der Felgen (2) und der Reifenbreite erreichbar ist.

2. Achse für Nutzfahrzeuge nach Anspruch 1, **dadurch gekennzeichnet, dass** die Länge (7) des Achsmittelteils (1) so bestimmt wird, dass bei den definierten Einpreßtiefen (9) und Reifenbreiten eine Radaufstandskraft (10) innerhalb von Druckpunktlinien (11, 12) der jeweiligen Radlager (13) angeordnet ist.

3. Achse für Nutzfahrzeuge nach Anspruch 2, **dadurch gekennzeichnet, dass** die Länge (7) des Achsmittelteils (1) so definiert ist, dass bei Verwendung unterschiedlicher Reifen (4) und Felgeneinpreßtiefen (9) eine nahezu gleiche Lebensdauer der Radlager (13) erreicht wird.

## Claims

1. The invention relates to a commercial vehicle axle with an axle center part (1), wheel hubs (2) and wheel bearings (13), and with rims (3) with different offset (9) mounted to the wheel hubs (2), and with tires (4) with different width mounted to the rims (3), and with an overall width (8) defined by the components of the axle (8), the rims (3) and the tires (4), with the length (7) of the axle center part (1) being determined in such a way that the overall length of the axle (8) needed for the respective commercial vehicle is exclusively realized through alteration of the offset (9) of the rims and the tire width, for application of the axle in at least two distinctly differently wide commercial vehicles.

2. A commercial vehicle axle according to claim 1, **characterized in that** the length (7) of the axle center part (1) is determined in such a way that with the offsets (9) and tire widths defined, a tire contact force (10) is arranged within the lines of pressure points (11, 12) of the wheel bearings (13).

3. A commercial vehicle axle according to claim 2, **characterized in that** the length (7) of the axle center part (1) is defined in such a way that with the use of different tires (4) and rim offsets (9), the service life of the wheel bearings (13) can reach almost the same level.

## Revendications

1. Essieu pour véhicules utilitaires comportant une partie centrale de l'essieu (1), des moyeux de roues (2), des roulements de roues (13) et des jantes (3) qui peuvent être montées sur les moyeux de roues (2) et qui ont des déports de voile définis différents (9), et des pneus (4) qui peuvent être montés sur les jantes (3), ceux-ci ayant des largeurs différentes définies et une largeur totale (8) déterminée par les éléments de l'essieu (8), des jantes (3) et des pneus (4), sachant que lors de l'utilisation de l'essieu dans au moins deux véhicules utilitaires dont la largeur est nettement différente, la longueur (7) de la partie centrale de l'essieu (1) est déterminée de façon à ce que la largeur totale de l'essieu (8) nécessaire pour les véhicules utilitaires correspondants peut être atteinte exclusivement par la variation du déport de voile (9) des jantes (2) et variation de la largeur des pneus.

2. Essieu pour véhicules utilitaires selon la revendication 1, **caractérisé en ce que** la longueur (7) de la partie centrale de l'essieu (1) est déterminée de façon à ce que, en tenant compte des déports de voile (9) et des largeurs de pneus définis, une force à la roue résultante de la charge verticale (10) se situe dans de lignes de points de contact (11, 12) des roulements de roues correspondants (13).

3. Essieu pour véhicules utilitaires selon la revendication 2, **caractérisé en ce que** la longueur (7) de la partie centrale de l'essieu (1) est définie de façon à ce que lors de l'utilisation de différents pneus (4) et en cas de différents déports de voile de jante (9) les roulements de roues (13) atteignent une durée de vie presque identique.
